Europäisches Patentamt

European Patent Office

Office européen des brevets

(11) Publication number: **0 246 352 B1**

(12) **EUROPEAN PATENT SPECIFICATION**

(45) Date of publication of patent specification: **02.05.91**  (51) Int. Cl.5: **G01C 19/64, H01S 3/083**

(21) Application number: **86107048.0**

(22) Date of filing: **23.05.86**

(54) Readout apparatus for a ring laser angular rate sensor.

(43) Date of publication of application:
**25.11.87 Bulletin 87/48**

(45) Publication of the grant of the patent:
**02.05.91 Bulletin 91/18**

(84) Designated Contracting States:
**DE FR GB IT SE**

(56) References cited:
**DE-B- 1 199 016**
**US-A- 4 344 706**

(73) Proprietor: **HONEYWELL INC.**
**Honeywell Plaza**
**Minneapolis Minnesota 55440(US)**

(72) Inventor: **Podgorski, Theodore J.**
**1764 Maryknoll Avenue**
**Maplewood Minnesota 55109(US)**

(74) Representative: **Herzbach, Dieter et al**
**Honeywell Europe S.A. Holding KG Patent-**
**und Lizenzabteilung Kaiserleistrasse 55**
**Postfach 184**
**W-6050 Offenbach am Main(DE)**

## Description

The present invention relates to a readout apparatus for a ring laser angular rate sensor according to the preamble of claim 1.

A so-called ring laser gyroscope is basically a laser apparatus having a ring type resonant cavity, typically triangular in configuration. The laser beam is directed around the triangular path by suitable mirrors positioned at each of the corners of the triangular structure. In most cases, there are two laser beams travelling in opposite directions relative to each other around the ring. The positioning of the mirrors in the corners of the ring, or triangle, direct the laser beams down the channels of the resonant cavity. At one of the corners, the mirror must take the form of a so-called beam splitter. There a portion of each of the laser beams is reflected into the resonating cavity while another portion of each of the beams is transmitted through the mirror into a readout assembly. Some examples of ring laser gyros are shown and described in US-A 3,373,650; 3,390,606; 3,467,472; and 4,152,071.

A readout apparatus according to the preamble of claim 1 is known from US-A-4 344 706 and comprises a readout mirror at the readout corner of the triangular path of the ring laser gyroscope whereat said readout mirror is formed on a flat substrate member having parallel inner and outer surfaces. A suitable prismatic readout member is then bonded to the outer surface of the substrate member. The prism is used to fold at least one of the laser beams to make both beams emerge from the prism in substantially the same direction. This produces an interference pattern which may then be detected as a function of the frequency difference of the two beams, hence of the rotation of the ring laser structure. In such structures, the alignment of the readout optics to combine the beams is generally time-consuming and expensive and frequently introduces stability problems.

In US-A 4 288 163 there is shown a readout structure for ring-laser gyro wherein the readout prism also serves, in an incidental showing, as the substrate for a partially reflecting so-called beam splitter. That structure, however, is a highly complex symmetrical prism providing triple internal reflection of both beams to provide converging beams at the output thereof.

It is, accordingly, an object of the present invention to provide an improved readout apparatus for a ring laser gyro which can be easily aligned with respect to the laser beams. This object is achieved by the features of claim 1. A further advantageous embodiment of the readout apparatus may be taken from the dependent claim.

In accordance with the present invention there has been provided an optical readout arrangement which features a unitary optical element which serves both as a substrate for the corner mirror of the ring laser gyro and as a prismatic beam folding and combining arrangement without requiring a total reflecting corner which has to be exactly aligned with respect to the laser beam.

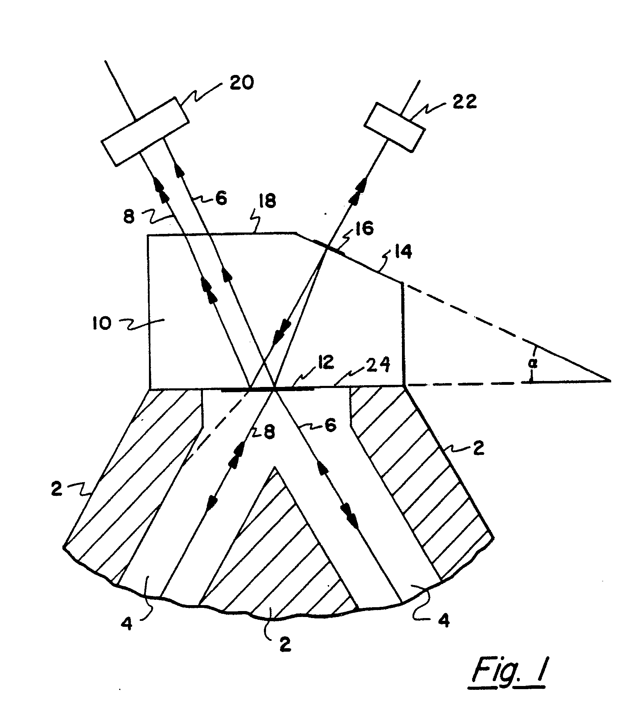

A better understanding of the present invention may be had from the following detailed description when read in the light of the accompanying drawing in which the single figure is a fragmentary representation of a ring laser gyro embodying the present invention.

Referring now to the drawing in more detail, there is shown in the single figure a fragmentary portion of a ring laser gyro structure wherein a mechanically and thermally stable block 2 which, in a preferred embodiment, is triangular in configuration. The block 2 has formed therein a cavity 4. The cavity is sealed at each of the corners by a substrate block which carries a reflector at the inner surface thereof. The thus sealed cavity is filled with a suitable lasing gas as is well-known in the art. Also included, but not shown herein nor forming a part of the present invention, is suitable exciting means for generating a laser beam in the cavity 4. As previously noted, the laser beam in the cavity 4 is actually in the form of two counter-rotating laser beams. A first such laser beam 6 is indicated by a single arrowhead, while the second laser beam 8 is indicated by a double arrowhead. At the selected corner of the ring laser block 2 there is positioned a reflector substrate member 10. The substrate 10 is preferably made of the same substance as the block 2. This has the characteristic of being mechanically and thermally stable. Additionally, the characteristic is such that it is relatively transparent to the light of the laser beam. The substrate 10 is suitably bonded to the corner of the block 2 thereby sealing the cavity at that corner. The inner major surface of the substrate 10 is provided with a suitable beam splitter 12 which reflects a major portion each of the two laser beams approaching from their respective legs of the cavity 4 back into the other legs of the cavity 4 to provide the counter rotating beams within the cavity. A second portion of the beams 6 and 8 are transmitted through the beam splitter 12 into substrate 10.

In the systems heretofore, the substrate 10 has been in the form of a transparent block having a rectangular cross-section in the plane of the path of the light beams. Then a prism is superimposed upon the substrate and used to redirect the light beams in internal paths to provide the desirable combination of the light beams to produce the desired interference pattern which, in turn, may be detected as a readout of the ring laser gyro. As hereinbefore noted, the positioning of the prism on the second major surface of a reflector substrate block introduces bonding stresses and requires a considerable time and effort in positioning and adjusting the prismatic elements during the curing and consequential dimensional changes of the cement or bonding agent. In accordance with the present invention, those difficulties are avoided. In accordance with the present invention, one corner of the substrate member 10, opposite from the beam splitter 12 is cut off at a predetermined angle alpha. The cut off corner forms a new surface 14 which is polished and provided with reflective coating in the form of a beam splitter 16. A surface portion 18, which comprises the uncut portion of the surface opposite from the beam splitter 12, constitutes an exit port for the combined laser beams.

As may be seen from the drawings, the first laser beam 6 which is illustrated as being the counter-clockwise rotating laser beam impinges on the beam splitter 12 whereat a major portion of the beam 6 is reflected back into the cavity 4 in the leg opposite from the one in which it approached the beam splitter 12. The remainder of the beam 6, indicated by the single arrowheads, is transmitted through the beam splitter 12 into the substrate 10, out through the surface 18 thereof and directed to impinge upon a detector 20. The clockwise beam 8, indicated by the double arrowheads, impinges upon the beam splitter 12 with a major portion of the beam being reflected back into the cavity along the leg opposite the one from which it approached the beam splitter 12. The remaining portion of the beam 8 is transmitted through the beam splitter 12 into the substrate member 10 to impinge upon the beam splitter 16 positioned on the surface 14. Here, again, the beam 8 has a major portion reflected by beam splitter 16 into the substrate member 10 to again impinge upon the opposite surface of the beam splitter 12. There, the beam 8 is primarily reflected back into the substrate 10 toward the surface 18 to exit therefrom and impinge upon the detector 20. A small portion of the beam 8 which impinges upon the beam splitter 16 is transmitted through the beam splitter 16 to impinge upon a second detector 22. The detector 22 may be used to ascertain the power level of the laser beam exiting from the beam splitter 16 thereby indicating the tuning of the resonant cavity 4.

The beams 6 and 8 exiting from the surface 18 and falling upon the detector 20 form interference patterns, or fringes, which may be sensed by the detector 20 as an indication of the rotation of the ring laser gyro about a predetermined axis (not shown). The angle alpha is so chosen as to keep the angle between the beams 6 and 8 as small as possible in order to provide interferences fringes which are of detectable dimension. At the same time, the angle between the two beams should be such as to minimize the retransmission of energy from the beam 8 back into the cavity 4 through the beam splitter 12 in such a manner as to tend to produce a lock-up of the counter-rotating beams.

Thus there has been provided, in accordance with the present invention, an improved readout structure for a ring laser gyro which is simplified in structure, which is economical to construct and to assemble and which provides an improved stability in assembly and operation.

## Claims

1. Readout apparatus for a ring laser angular rate sensor comprising

a laser block (2) for providing a ring laser path for first and second counter-propagating laser beams (6,8) through interconnecting channels (4) therein, and further comprising a readout mirror (12) and a beam combining optical element (10) at a corner of said laser block,

said beam combining element (10) including at least first, second and third surfaces (24,14,18), said second surface (14) being at an acute angle ($\alpha$) relative to said first surface (24), with said readout mirror serving to reflect a major portion of said first and second laser beams impinging on it from respective ones of said channels into a respective adjacent channel and to transmit a smaller portion of each of said first and second laser beams into said beam combining element and to exit said smaller portion of said first beam through said third surface (18) and to transmit a smaller portion of said second beam toward said second surface, said beam combining element serving to reflect said smaller portion of said second laser beam backwardly to impinge on said readout mirror, a portion of said backwardly reflected beam being reflected from said readout mirror towards said third surface of said beam combining element, and said acute angle having a value such that said smaller portion of said first beam and said portion of said backwardly reflected beam reflected from said readout mirror are directed towards said third surface to exit through said third surface closely adjacent to each other to produce interference fringes,

**characterized in that**

said readout mirror and said beam combining element are constituted by a unitary optical element consisting of a substrate (10) with said first surface (24) having portions thereof bonded to said block (2) at the connection of two of said interconnecting channels (4), with beam splitter means (12) provided on said first surface (24) between the portions at which said substrate is bonded to said block and serving as the readout mirror and with a further beam splitter (16) provided as a coating on said second surface (14) to reflect backwardly said smaller portion of said second laser beam to impinge on said readout mirror.

2. Readout apparatus according to claim 1, **characterized in that** said beam splitter (16) on said second surface (14) serves to reflect a major portion of said smaller portion of said second laser beam incident theron and to transmit a further small portion therethrough with a detector (22) detecting said further small portion.


**Revendications**

1. Dispositif de lecture pour gyromètre avec un laser en anneau comprenant:
   - un bloc laser (2) pour fournir une trajectoire de laser en anneau pour des premier et second faisceaux laser se propageant en directions opposées (6,8) par l'intermédiaire de canaux d'interconnexion (4) prévus dans celui-ci et comprenant en outre un miroir de lecture (12) et un élément optique de combinaison de faisceaux (10) dans un angle dudit bloc laser, ledit élément de combinaison de faisceaux (10) comprenant au moins des première, seconde et troisième surfaces (24, 14, 18), la seconde surface (14) étant disposée avec un angle aigu (α) relativement à la première surface (24), ledit miroir de lecture servant à réfléchir une partie majeure des premier et second faisceaux le frappant à partir de l'un ou de l'autre respectivement desdits canaux vers un canal adjacent respectif et à transmettre une partie plus petite de chacun des premier et second faisceaux laser vers l'élément de combinaison de faisceaux et à sortir la plus petite partie du premier faisceau par l'intermédiaire de la troisième surface (18) et à transmettre une partie plus petite du second faisceau vers la seconde surface, ledit élément de combinaison de faisceaux servant à réfléchir ladite partie plus petite du second faisceau laser vers l'arrière de manière à ce qu'elle frappe un second miroir de lecture, une partie dudit faisceau réfléchi vers l'arrière étant réfléchie a partir dudit miroir de lecture vers la troisième surface dudit élément de combinaison de faisceaux et ledit angle aigu ayant une valeur telle que ladite partie plus petite dudit premier faisceau et ladite partie dudit faisceau réfléchi vers l'arrière qui est réfléchie à partir dudit miroir de lecture sont dirigées vers ladite troisième surface en vue de sortir par l'intermédiaire de ladite troisième surface étroitement adjacente l'une à l'autre pour produire des franges d'interférence,
   caractérisé en ce que
   le miroir de lecture et ledit élément de combinaison de faisceaux sont composés d'un élément optique unitaire comprenant un substrat (10) dont ladite première surface (24) a des parties de celle-ci liées audit bloc (2) à la connexion de deux desdits canaux d'interconnexion (4), des moyens formant diviseur de faisceau (12) étant prévus sur la première surface (24) entre les parties auxquelles ledit substrat est lié au bloc et formant le miroir de lecture, tandis qu'un autre diviseur de faisceau (16) est prévu sous la forme d'un revêtement sur la seconde surface (14) en vue de réfléchir vers l'arrière ladite partie plus petite dudit second faisceau laser qui frappe le miroir de mesure.

2. Dispositif de lecture selon la revendication 1, caractérisé en ce que le diviseur de faisceaux (I6) sur ladite seconde surface (14) sert à réfléchir une partie majeure de la partie plus petite dudit second faisceau laser incident sur celle-ci et à transmettre en outre une petite partie à travers celle-ci, un détecteur (22) détectant ladite autre petite partie.


**Ansprüche**

1. Auslesevorrichtung für einen Ringlaser-Winkelgeschwindigkeitssensor mit
   einem Laserblock (2) zur Vorgabe einer Ringlaserstrecke für erste und zweite gegenläufige Laserstrahlen (6,8) durch Verbindungskanäle (4) in dem Laserblock und mit einem Auslesespiegel (12) und einem optischen Strahl-überlagerungselement (10) an einer Ecke des Laserblockes,
   wobei das überlagerungselement (10) wenigstens erste, zweite und dritte Oberflächen (24,14,18) aufweist, die zweite Oberfläche (14) einen spitzen Winkel (α) in Bezug auf die erste Oberfläche (24) aufweist, der Auslesespiegel der Reflexion eines Hauptanteils der auf ihn aus den Kanälen auftreffenden ersten und zweiten Laserstrahlen in einen entsprechend benachbarten Kanal dient und ein geringerer Teil eines jeden ersten und zweiten Laserstrahles in das Strahl-überlagerungselement überträgt, so daß der geringere Teil des ersten Strahles durch die dritte Oberfläche (18) austritt und ein geringerer Teil des zweiten Strahles zur zweiten Oberfläche übertragen wird, wobei das Strahl-überlagerungselement der Reflexion des geringeren Teils des zweiten Laserstrahles zurück auf den Auslesespiegel dient und ein Teil des zurückreflektierten Strahles von dem Auslesespiegel zu der dritten Oberfläche des Strahl-überlagerungselements reflektiert wird und der spitze Winkel einen solchen Wert aufweist, daß der geringere Teil des ersten Strahles und der Teil des von dem Auslesespiegel zurückreflektierten Strahles so zu der dritten Oberfläche gerichtet werden, um aus der dritten Oberfläche eng benachbart zueinander auszutreten und Beugungsstreifen zu bilden, **dadurch gekennzeichnet,**
daß der Auslesespiegel und das Strahl-überlagerungselement durch ein einheitliches optisches Element gebildet werden, das aus einem Substrat (10) besteht, wobei die erste Oberfläche (24) mit dem Block (2) verbindende Teile an der Kreuzung zwischen zwei Verbindungskanälen (4) aufweist, wobei eine Strahlteilervorrichtung (12) auf der ersten Oberfläche (24) zwischen den Teilen angeordnet ist, an denen das Substrat mit dem Block verbunden ist, und als Auslesespiegel dient, und daß ein weiterer Strahlteiler (16) als eine Beschichtung auf der zweiten Oberfläche (14) angeordnet ist, um den geringeren Teil des zweiten Laserstrahles zurückzuwerfen, so daß er auf den Auslesespiegel auftrifft.

2. Auslesevorrichtung nach Anspruch 1, **dadurch gekennzeichnet,** daß der Strahlteiler (16) auf der zweiten Oberfläche (14) der Reflexion eines Hauptteiles des geringeren Teils des auf treffenden zweiten Laserstrahles und der Übertragung eines weiteren geringeren Teils dient, wobei ein Detektor (22) diesen weiteren geringeren Teil detektiert.

*Fig._I*